# EUROPÄISCHE PATENTANMELDUNG

(11) **EP 1 291 319 A2**
(43) Veröffentlichungstag der Anmeldung: **12.03.2003**
(21) Anmeldenummer: 02019636.6
(22) Anmeldetag: 03.09.2002
(51) Int. Cl.: C01B 3/38, C01B 3/48, C01B 3/58, B01J 8/04

(54) **Apparat zur Erzeugung von Wasserstoff zum Betrieb von Brennstoffzellen**

(30) Priorität: 08.09.2001 DE 10144285
(71) Anmelder: Viessmann Werke GmbH & Co, 35107 Allendorf (DE)
(72) Erfinder: Britz, Peter, Dr., 35108 Allendorf (DE); Holtorf, Jürgen, Dr., 35039 Marburg (DE); Zartenar, Nicolas, 35091 Cölbe (DE); Dzubiella, Manfred, Dr., 35066 Frankenberg (DE); Heikrodt, Klaus, Dr., 35108 Allendorf (DE)
(74) Vertreter: Wolf, Günter, Dipl.-Ing.

(57) **Zusammenfassung**

Die Erfindung betrifft einen Apparat zur Erzeugung von Wasserstoff zum Betrieb von Brennstoffzellen, umfassend einen Reformer (1) zur Umwandlung von Kohlenwasserstoffgas und Wasser in Wasserstoff und weitere Reformer-Produkte, wobei dem Reformer (1) zur chemischen Aufbereitung der Reformer-Produkte mehrere reaktionsspezifisch angepaßte, im wesentlichen ringförmig ausgebildete und zueinander konzentrisch angeordnete Katalysatorstufen (2, 3, 4) nachgeschaltet sind. Nach der Erfindung ist vorgesehen, dass die Strömung des Wasserstoffs und der weiteren Reformer-Produkte innerhalb der Katalysatorstufen (2, 3, 4) aufgrund entsprechend ausgerichteter Strömungsführungen im wesentlichen radial mit einem nach außen hin abfallenden Temperaturprofil ausgerichtet ist.

## Beschreibung

Die Erfindung betrifft einen Apparat zur Erzeugung von Wasserstoff gemäß dem Oberbegriff des Anspruchs 1.

Derartige Apparate, die insbesondere in versuchstechnischem Maßstab und unter Laborbedingungen zur Erzeugung von Wasserstoff zum Betrieb von Brennstoffzellen betrieben werden, bestehen in der Regel aus einem entweder allo- oder autotherm arbeitenden Reformer (d.h. die Reformierung erfolgt wahlweise durch äußerer Wärmeeinbrinung oder durch flammenfreie Verbrennung eines Teils der Reformer-Edukte) und nachgeschalteten Katalysatorstufen zur chemischen Aufbereitung der Reformer-Produkte. Sowohl der Reformer als auch die Katalysatorstufen weisen dabei eine katalytisch wirksame Oberfläche auf. Die Reformierung, d.h. die Umsetzung von Kohlenwasserstoffgas und Wasser in Wasserstoff und weitere Reformer-Produkte, erfordert dabei beim Reformer die Einbringung von Wärmeenergie, während die Aufbereitung der Reformer-Produkte in den Katalysatorstufen unter Wärmefreisetzung erfolgt, was zur Aufrechterhaltung einer stationären Betriebsweise einen entsprechenden Wärmeabtransport aus den dem Reformer nachgeschalteten Katalysatorstufen verlangt. Hierzu sind in der Regel zwischen oder innerhalb der Katalysatorstufen Wärmetauscher angeordnet, die gewährleisten, dass die Reformer-Produkte mit einer reaktionsspezifisch optimalen Temperatur durch die Stufen strömen.

Bekannt ist in diesem Zusammenhang ferner eine konzentrische Anordnung der Katalysatorstufen, und zwar derart, dass die Reformer-Produkte in einem ersten Schritt von einem zentral angeordneten Reformer an einen inneren Katalysatorring weitergeleitet werden, wobei dieser axial durchströmt wird. Nach einer Strömungsumlenkung der Reformer-Produkte werden diese einer weiteren, den ersten Katalysatorring konzentrisch umschliessenden und ebenfalls axial durchströmbaren Stufe zugeführt usw., bis die gewünschte Reinheit der Reformer-Produkte erreicht ist.

Als konzentrisch angeordnete Katalysatorstufen werden dabei, soweit bekannt, axial durchströmte Schüttungen mit katalytisch beschichteten Körner verwendet.

Diese an sich schon recht kompakte Anordnung der Katalysatoren hat aber, wie angedeutet, den Nachteil, dass der beim Reformierungsprozess entstandene Wasserstoff und die weiteren Reformer-Produkte beim Übergang von einer zur nächsten Stufe strömungstechnisch um 180° umgelenkt werden müssen, was auch hinsichtlich der Anordnung der Wärmetauscher zur Abfuhr der Katalysatorwärme und der Anbringung von Isolationsmaterial am Apparat insbesondere bezüglich des erforderlichen Platzbedarfes ungünstig ist.

Der Erfindung liegt die Aufgabe zugrunde, einen Apparat zur Erzeugung von Wasserstoff der eingangs genannten Art noch kompakter und wärmetechnisch günstiger zu gestalten.

Diese Aufgabe wird mit einem Apparat der eingangs genannten Art durch die im Kennzeichen des Anspruchs 1 genannten Merkmale gelöst.

Der Kern der Erfindung besteht mithin darin, die Strömung innerhalb der Katalysatorstufen von einer rein axialen auf eine im wesentlichen radiale Richtung umzustellen und die als Wendelrohrwärmetauscher mit definierten Spaltabständen ausgebildeten Wärmetauscher in zwischen den Katalysatorstufen ausgebildeten Ringspalträumen anzuordnen. Dies hat den Vorteil, dass keine Strömungsumkehrmaßnahmen vorgesehen werden müssen und dass die zur Einstellung des richtigen Temperaturniveaus erforderlichen Wärmetauscher einfach zwischen den in Form konzentrischer Ringe ausgebildeten Katalysatorstufen angeordnet werden können. Darüber hinaus lassen sich radial durchströmte Katalysatoren wesentlich einfacher gegen die Umgebung isolieren, da Produkt-Strömungskanäle nur noch zwischen den Stufen vorzusehen sind. So genügt es beispielsweise, die Ober- und Unterseite der konzentrisch angeordneten Katalysatorringe jeweils mit einer einzigen, geometrisch einfachen Isolationsschicht nach außen hin abzuschotten.

Bezüglich der Katalysatorstufen ist vorteilhaft vorgesehen, dass diese aus einem katalytisch beschichteten Drahtgewebe gebildet sind, wobei dieses vorzugsweise in Form eines zylindrischen Ringes gewickelt ist.

Für eine möglichst kompakte Bauform ist ferner vorteilhaft vorgesehen, dass der Reformer, die Katalysatorstufen und die Wärmetauscher in einem im wesentlichen zylindrischen Gehäuse mit kreisförmigem Deckel und Boden angeordnet sind. Dabei sind darüber hinaus vorzugsweise im Deckel und/oder im Boden hydraulische Anschluss- und Verbindungselemente für die Wärmetauscher angeordnet.

Zur Aufheizung des Reformers ist schließlich vorgesehen, dass zentral im Gehäuse ein Raum zur Anordnung eines Brenners angeordnet ist.

Andere vorteilhafte Weiterbildungen ergeben sich aus den abhängigen Ansprüche 2 bis 9.

Der erfindungsgemäße Apparat zur Erzeugung von Wasserstoff sowie seine vorteilhaften Weiterbildungen werden nachfolgend anhand der zeichnerischen Darstellung von drei Ausführungsbeispielen näher erläutert.

Es zeigt jeweils im Schnitt
- Fig. 1: einen Apparat zur Erzeugung von Wasserstoff mit einem axial durchströmten Reformer;
- Fig. 2: eine andere Ausführungsform des erfindungsgemäßen Apparats mit radial durchströmten Reformer und
- Fig. 3: eine weitere Ausführungsform des erfindungsgemäßen Apparats mit axialer Edukt Zu- und radialer Produkt-Abführung.

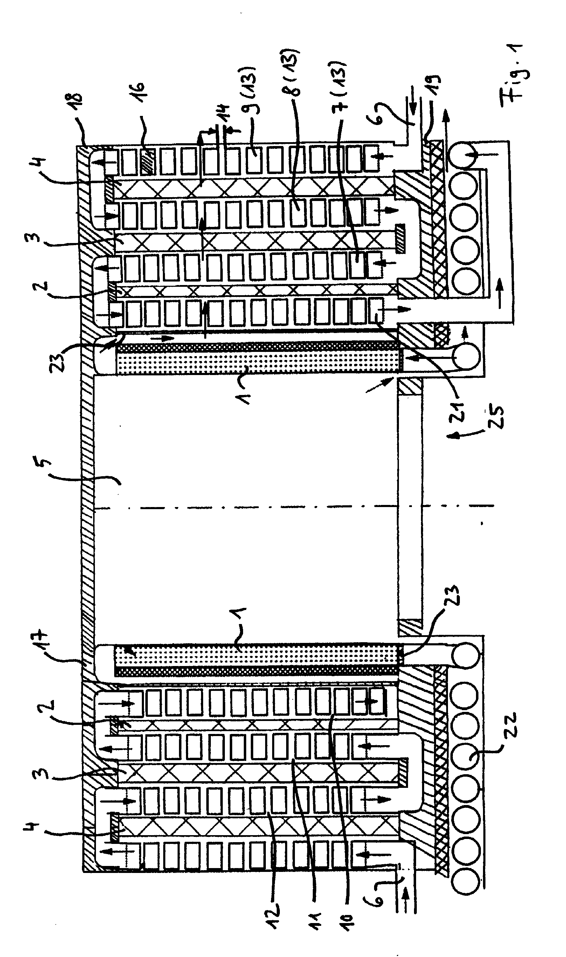

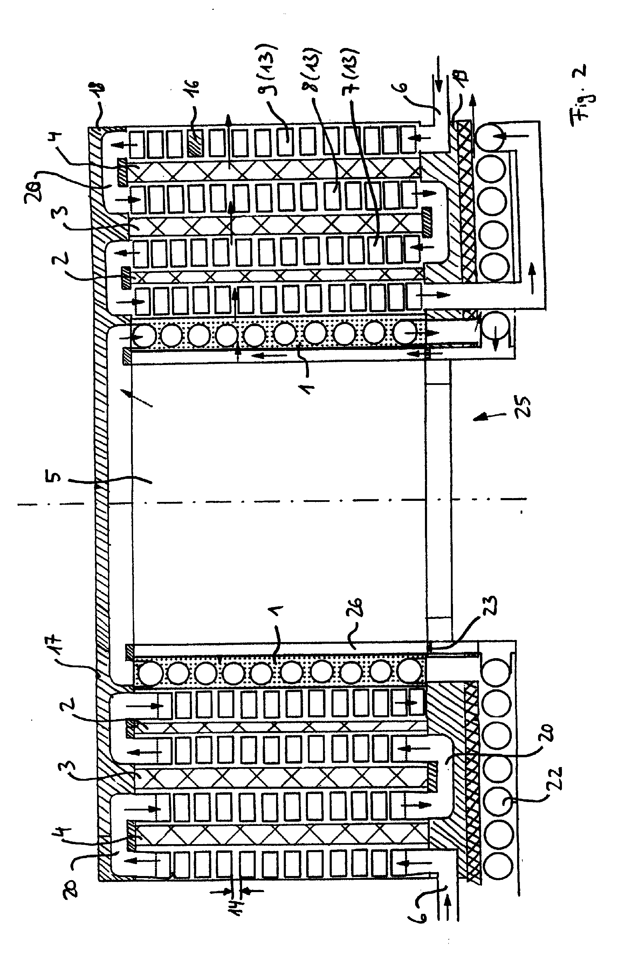

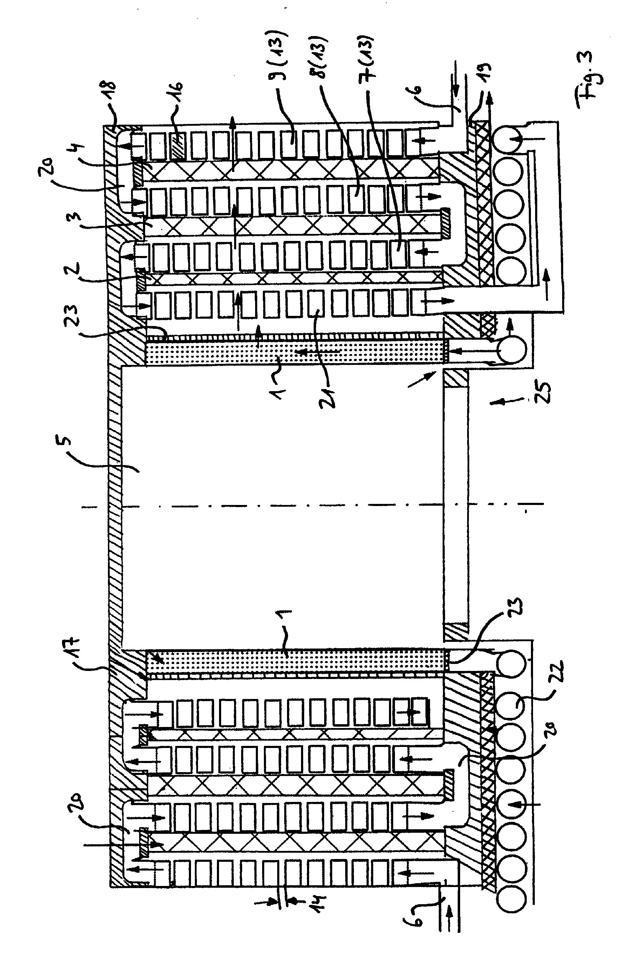

Die in den Figuren 1 bis 3 dargestellten Apparate zur Erzeugung von Wasserstoff zum Betrieb von Brennstoffzellen umfassen alle einen Reformer 1 zur Umwandlung von Kohlenwasserstoffgas und Wasser in Wasserstoff und weitere Reformer-Produkte. Der Reformer 1 ist bei allen drei Ausführungsbeispielen als zylindrischer Ring ausgebildet, unterscheidet sich aber hinsichtlich der Durchströmrichtung. Der Reformer 1 beim Apparat gemäß Fig. 1 wird beispielsweise rein axial durchströmt, im Gegensatz zum rein radial durchströmten Reformer 1 gemäß Fig. 2. Der Reformer 1 nach Fig. 3 weist schließlich eine axiale Zu- bzw. eine radiale Abführung für die Reformer-Edukte bzw. Produkte auf. Insbesondere beim Reformer gemäß Fig. 1 kommt dabei in Betracht, diesen als Schüttung aus katalytisch beschichteten Körner auszubilden.

Allen drei Apparaten ist wiederum gemein, dass dem Reformer 1 zur chemischen Aufbereitung der Reformer-Produkte mehrere reaktionsspezifisch angepaßte, im wesentlichen ringförmig ausgebildete und zueinander konzentrisch angeordnete Katalysatorstufen 2, 3, 4 nachgeschaltet sind.

Wesentlich für diesen Apparat ist nun, und zwar für alle drei Ausführungsformen, dass die Strömung des Wasserstoffs und der weiteren Reformer-Produkte innerhalb der Katalysatorstufen 2, 3, 4 aufgrund entsprechend ausgerichteter Strömungsführungen im wesentlichen radial mit einem nach außen hin abfallenden Temperaturprofil ausgerichtet ist und dass die Wärmetauscher 7, 8, 9 als Wendelrohrwärmetauscher 13 - vorzugsweise mit rechteckförmigen Strömugsquerschnitt 16 - mit definierten Spaltabständen 14 ausgebildet sind. Zur Vergleichmäßigung des Temperaturniveaus innerhalb des Apparats sind dabei die Spaltabstände vorteilhaft in Axialrichtung unterschiedlich bemessen, so dass aufgrund einer gleichmäßigen Wärmeverteilung eine optimale Nachreinigung der Reformer-Produkte gewährleistet ist, wobei zur weiteren Optimierung zusätzlich noch vorteilhaft vorgesehen ist, dass jeder Wendelrohrwärmetauscher 13 als Doppelwendel 15 ausgebildet ist und die Wendeln jeweils gegenläufig durchstömt werden.

Die Strömungsführung in den Katalysatoren kann dabei beispielsweise durch entsprechende Strömungsführungskanäle innerhalb des Materials (sogenannten Katalysatorwaben) oder aber auch bei einfach porösen Katalysatoren durch geeignete Anordnung der vorteilhaft zwischen den Katalysatorstufen angeordneten Wärmetauscher ausgebildet sein. Unabhängig also davon, mit welchen technischen Mitteln die Radialströmung letztlich bewirkt wird, ist dieses Merkmal zur Ausnutzung der vorteilhaften Wirkungsweise des erfindungsgemäßen Apparats wesentlich.

Nicht dargestellt ist in den Figuren 1 bis 3 ein (ohne weiteres vorstellbarer) Brenner zur Einbringung der entsprechenden Wärmemenge in den Reformer 1. So ist beispielsweise vorgesehen, durch die bodenseitige Öffnung am Apparat wahlweise einen halbkugelförmigen oder zylindrischen Flächenbrenner in den vom Reformer 1 umschlossenen Zentralbereich 5 einzuführen.

Wie angedeutet, handelt es sich bei der chemischen Reaktion im Reformer 1 um eine endotherme, d.h. dem Reformer 1 muss Wärme zugeführt werden, um die Umwandlung von Kohlenwasserstoffgas und Wasser in Wasserstoff und weitere Reformer-Produkte zu bewirken. Im Gegensatz dazu wird bei der katalytischen Reaktion an den nachgeschalteten Katalysatoren 2, 3, 4 Wärme freigesetzt, weshalb zwischen diesen Stufen, wie erwähnt, temperaturspezifisch ausgelegte Wärmetauscher 7, 8, 9 angeordnet sind.

Hinsichtlich des erwähnten nach außen hin abfallenden Temperaturprofils liegen bei günstiger wärmetechnischer Auslegung Temperaturniveaus von 400°C im reformernahen Katalysator 2 (sogenannte Hoch-Temperatur-Shiftstufe), 200°C im mittleren Katalysator 3 (sogenannte Niedrig-Temperatur-Shiftstufe) und etwa 100°C im äußeren Katalysator 4 (sogenannte SelOx-Stufe) vor. Da die Katalysatorstufen darüber hinaus, wie erwähnt, ringförmig ausgebildet sind, ergibt sich eine isolationstechnisch optimale Anordnung, zumal sich aufgrund der fehlenden Strömungsumlenkungen (siehe beschriebener Stand der Technik) für die Reformer-Produkte Deckel und Boden des Gehäuses relativ einfach gegen die Umgebung isolieren lassen.

Ein weiterer Vorteil der konzentrischen Anordnung der Katalysatorstufen besteht ferner darin, dass die äußerste Katalysatorstufe, also die SelOx-Stufe, aufgrund ihres großen Durchmessers eine vergleichsweise große Oberfläche aufweist und somit eine sehr gründliche Feinreinigung der Reformer-Produkte gewährleistet ist.

Um auch bei den inneren Katalysatoren für eine große katalytisch wirksame Oberfläche zu sorgen, ist ferner vorteilhaft vorgesehen, dass die Katalysatoren aus einem beschichteten Drahtgewebe gebildet sind, das beispielsweise in Form eines zylindrischen Ringes gewickelt ist. Die drei Katalysatoren 2, 3, 4 bilden aufgrund ihrer unterschiedlichen Durchmesser auf diese Weise Ringspalträume 10, 11, 12, in denen vorteilhaft die vorerwähnten, temperaturspezifisch ausgelegte Wärmetauscher 7, 8, 9 angeordnet sind.

Wie aus den Figuren 1 bis 3 ersichtlich, ist zur Realisierung einer möglichst kompakten Bauweise ferner vorteilhaft vorgesehen, dass der Reformer 1, die Katalysatorstufen 2, 3, 4 und die Wärmetauscher 7, 8, 9 in einem im wesentlichen zylin-drischen Gehäuse 17 mit kreisförmigem Deckel 18 und Boden 19 angeordnet sind. Dabei sind wahlweise im Deckel 18 und/oder im Boden 19 hydraulische Anschluss- und Verbindungselemente 20 zur hydraulischen Verbindung der Wärmetauscher 7, 8, 9 vorgesehen.

Um eine gleichmäßige Zu- und Abströmung der Reformer-Edukte und -Produkte zum Reformer 1 bzw. von diesem weg zu gewährleisten, ist unter Ausnutzung des sich einstellenden Druckverlustes vorteilhaft vorgesehen, sowohl am Ein- als auch am Austritt des Reformers ein Lochblech 23 anzuordnen.

Hinsichtlich einer aufgrund der effektiveren Reformierung vorteilhaften Vorheizung der Reformer-Edukte ist bei den bevorzugten Ausführungsformen gemäß den Figuren 1 bis 3 vorgesehen, dem Reformer 1 mindestens ein Wärmetauscher 24 vorzuschalten, der unter Ausbildung einer katalysatorstufen- und temperaturprofilangepaßten Wärmeübertragung mit den nachgeschalteten Wärmetauschern 7, 8, 9 verbunden ist. Als konstruktiv besonders vorteilhaft hat es sich dabei erwiesen, wenn der mindestens eine dem Reformer 1 vorgeschaltete Wärmetauscher 24 den den Katalysatorstufen 2, 3, 4 nachgeschalteten Wärmetauschern 7, 8, 9 entspricht bzw. diese bildet.

Zum besseren Verständnis des erfindungsgemäßen Apparats sollen nachfolgend die Stoffströme im einzelnen betrachtet werden:

Die Reformer-Edukte, Kohlenwasserstoffgas und Wasser, werden über den Zufuhranschluss 6 mit einer Temperatur von etwas unter 100°C dem erfindungsgemäßen Apparat zugeführt. An den Zufuhranschluss 6 schließt sich ein erster Wärmetauscher 9 an, der in Form eines Wendelrohrwärmetauscher 13 ausgebildet ist. Die Reformer-Edukte strömen in diesem in einer schraubenförmigen Bewegung vom Zufuhranschluss 6 über den vorzugsweise rechteckförmig ausgebildeten Strömugsquerschnitt des Wendelrohrwärmetauschers 13 zum oberen Deckel 18 des Apparats, wo eine entsprechende Strömungsumkehrung vorgesehen ist, die bewirkt, dass die Reformer-Edukte nunmehr durch einen zweiten Wärmetauscher 8, der ebenfalls als Wendelrohrwärmetauscher 13 ausgebildet ist, nach unten zum Boden 19 des Apparats gelangen. Dort und auch nachfolgend am Deckel 18 sind zwei weitere Strömungsumlenkungen vorgesehen, die die einzelnen ringförmig Wärmetauscher 7, 8, 9, 21 mit einander verbinden. An den Wärmetauscher 21 schließt sich noch ein spiralförmiger Abgaswärmetauscher 22 an, der vom inzwischen etwa 400°C heißen Eduktstrom von außen nach innen durchströmt wird, bevor die Edukte dann schließlich zum Reformer 1 gelangen.

Je nachdem, in welcher Weise die Edukte dem Reformer 1 zugeführt werden (radial oder axial), sind, wie erwähnt, an unterschiedlichen Stellen Lochbleche 23 zur Vergleichmäßigung der Strömung vorgesehen.

Innerhalb des Reformers 1 werden die Reformer-Edukte in sogenannte Reformer-Produkte umgewandelt, d.h. aus dem Kohlenwasserstoffgas und dem dampfförmig vorliegenden Wasser wird aufgrund einer endothermen katalytischen Reaktion Wasserstoff, Kohlenmonoxid und Kohlendioxid erzeugt.

An den Reformer 1, der von einem nicht dargestellten, im Zentralbereich 5 des Apparats angeordneten Brenner auf etwa 800°C bis 900°C aufgeheizt ist, schließen sich dann (je nach Ausführungsform wieder nach Durchströmen eines weiteren Lochbleches 23) die erwähnten, ringförmigen Katalysatorstufen 2, 3 und 4 an, zwischen denen zur Wärmeabfuhr die Wärmetauscher 7, 8, 9, 21 angeordnet sind, die, wie erläutert, vorteilhaft dazu verwendbar sind, die Reformer-Edukte vorzuheizen.

Für die Erfindung wesentlich ist, wie erläutert, dass die Reformer-Produkte in radialer Richtung durch die nachgeschalteten Katalysatorstufen 2, 3 und 4 strömen. Mittels einer entsprechenden thermodynamischen Auslegung läßt sich dabei über die Festlegung der Spaltabstände 14 zwischen den einzelnen rechteckigen Wendeln der Wendelrohrwärmetauscher eine gleichmäßige Geschwindigkeitsverteilung der Reformer-Produkte über die Höhe der Katalysatorstufen 2, 3 und 4 einstellen.

Einzugehen ist schließlich noch auf die Unterschiede zwischen den Apparaten gemäß den Figuren 1 bis 3:
Beim Apparat gemäß Fig. 1 erfolgt sowohl die Zu- als auch die Abströmung zum bzw. vom Reformer 1 in axialer Richtung. Am oberen Ende des Reformers 1 werden die Reformer-Produkte umgelenkt und gelangen zu einem zylindrisch geformten Lochblech, das für eine gleichmässige Zuströmung der Reformer-Produkte zu den Katalysatorstufen 2, 3 und 4 sorgt.
Beim Apparat gemäß Fig. 2 erfolgt die Zuströmung der Reformer-Edukte im Unterschied zu Fig. 1 im wesentlichen radial, da eine dem Refomer 1 vorgeschaltete Kammer 26 zunächst eine vertikale Verteilung der Edukte über die gesamte Höhe des Apparats ermöglicht. Die Abströmung aus dem Reformer 1 erfolgt ebenfalls radial.
Beim Apparat gemäß Fig. 3 erfolgt die Zuströmung der Edukte zum Reformer 1 schließlich wieder rein axial. Innerhalb des Reformers 1 wird der Stoffstrom dann umgelenkt, so dass die Abströmung radial erfolgen kann.

### Bezugszeichenliste

- 1: Reformer
- 2: Katalysatorstufe
- 3: Katalysatorstufe
- 4: Katalysatorstufe
- 5: Zentralbereich
- 6: Zufuhranschluss
- 7: Wärmetauscher
- 8: Wärmetauscher
- 9: Wärmetauscher
- 10: Ringspaltraum
- 11: Ringspaltraum
- 12: Ringspaltraum
- 13: Wendelwärmetauscher
- 14: Spaltabstand
- 16: Strömungsquerschnitt
- 17: Gehäuse
- 18: Deckel
- 19: Boden
- 20: Anschluss- und Verbindungselemente
- 21: Wärmetauscher
- 22: Abgaswärmetauscher
- 23: Lochblech
- 24: Wärmetauscher
- 25: Öffnung
- 26: Kammer

## Patentansprüche

1. Apparat zur Erzeugung von Wasserstoff zum Betrieb von Brennstoffzellen, umfassend einen Reformer (1) zur Umwandlung von Kohlenwasserstoffgas und Wasser in Wasserstoff und weitere Reformer-Produkte, wobei dem Reformer (1) zur chemischen Aufbereitung der Reformer-Produkte mehrere reaktionsspezifisch angepaßte, im wesentlichen ringförmig ausgebildete und zueinander konzentrisch angeordnete Katalysatorstufen (2, 3, 4) nachgeschaltet sind, wobei zwischen den Katalysatorstufen (2, 3, 4) temperaturspezifisch ausgelegte Wärmetauscher (7, 8, 9) angeordnet sind,
**dadurch gekennzeichnet,**
**dass** die Strömung des Wasserstoffs und der weiteren Reformer-Produkte innerhalb der Katalysatorstufen (2, 3, 4) aufgrund entsprechend ausgerichteter Strömungsführungen im wesentlichen radial mit einem nach außen hin abfallenden Temperaturprofil ausgerichtet ist und
**dass** die als Wendelrohrwärmetauscher (13) mit definierten Spaltabständen (14) ausgebildeten Wärmetauscher (7, 8, 9) in zwischen den Katalysatorstufen (2, 3, 4) ausgebildeten Ringspalträumen (10, 11, 12) angeordnet sind.

2. Apparat nach Anspruch 1,
**dadurch gekennzeichnet,**
**dass** jeder Wendelrohrwärmetauscher (13) zur gegenläufigen Durchströmung als Doppelwendel ausgebildet ist.

3. Apparat nach Anspruch 2,
**dadurch gekennzeichnet,**
**dass** die Wendelrohrwärmetauscher (13) einen rechteckförmigen Strömungsquerschnitt (16) aufweisen.

4. Apparat nach einem der Ansprüche 2 bis 3,
**dadurch gekennzeichnet,**
**dass** die Spaltabstände (14) zur Vergleichmäßigung des Temperaturniveaus innerhalb des Apparats in Axialrichtung unterschiedlich bemessen sind.

5. Apparat nach einem der Ansprüche 1 bis 4,
**dadurch gekennzeichnet,**
**dass** der Reformer (1), die Katalysatorstufen (2, 3, 4) und die Wärmetauscher (7, 8, 9) in einem im wesentlichen zylindrischen Gehäuse (17) mit kreisförmigem Deckel (18) und Boden (19) angeordnet sind.

6. Apparat nach Anspruch 5,
**dadurch gekennzeichnet,**
**dass** wahlweise im Deckel (18) und/oder im Boden (19) hydraulische Anschluss- und Verbindungselemente (20) für die Wärmetauscher (7, 8, 9) angeordnet sind.

7. Apparat nach Anspruch 5 oder 6,
**dadurch gekennzeichnet,**
**dass** wahlweise vor und/oder nach dem Reformer (1) zur Vergleichmäßigung der Zu- bzw. Abströmung der Reformer-Edukte bzw. -Produkte ein Lochblech (23) angeordnet ist.

8. Apparat nach einem der Ansprüche 1 bis 7,
**dadurch gekennzeichnet,**
**dass** dem Reformer (1) zur Vorheizung mindestens des Kohlenwasserstoffgases und des Wassers mindestens ein Wärmetauscher (24) vorgeschaltet ist, der unter Ausbildung einer katalysatorstufen- und temperaturprofilangepaßten Wärmeübertragung mit den nachgeschalteten Wärmetauschern (7, 8, 9) verbunden ist.

9. Apparat nach Anspruch 8,
**dadurch gekennzeichnet,**
**dass** der mindestens eine dem Reformer (1) vorgeschaltete Wärmetauscher (24) den den Katalysatorstufen (2, 3, 4) nachgeschalteten Wärmetauschern (7, 8, 9) entspricht bzw. diese bildet.
